(19) Europäisches Patentamt
European Patent Office
Office européen des brevets

(11) **EP 2 572 096 B1**

(12) **EUROPÄISCHE PATENTSCHRIFT**

(45) Veröffentlichungstag und Bekanntmachung des Hinweises auf die Patenterteilung:
**28.01.2015 Patentblatt 2015/05**

(21) Anmeldenummer: **11717652.9**

(22) Anmeldetag: **04.05.2011**

(51) Int Cl.:
*F02D 41/24* *(2006.01)*    *F02M 65/00* *(2006.01)*
*F02M 51/06* *(2006.01)*    *F02D 41/20* *(2006.01)*

(86) Internationale Anmeldenummer:
**PCT/EP2011/057147**

(87) Internationale Veröffentlichungsnummer:
**WO 2011/144452 (24.11.2011 Gazette 2011/47)**

(54) **VERFAHREN UND VORRICHTUNG ZUR ERMITTLUNG DES TATSÄCHLICHEN EINSPRITZBEGINNS EINES PIEZO-KRAFTSTOFF-EINSPRITZVENTILS**

METHOD AND DEVICE FOR DETERMINING THE ACTUAL START OF INJECTION OF A PIEZO FUEL INJECTION VALVE

PROCÉDÉ ET DISPOSITIF DE DÉTERMINATION DU DÉBUT EFFECTIF D'INJECTION D'UNE SOUPAPE D'INJECTION DE CARBURANT PIÉZOÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2010 DE 102010021169**

(43) Veröffentlichungstag der Anmeldung:
**27.03.2013 Patentblatt 2013/13**

(73) Patentinhaber: **Continental Automotive GmbH 30165 Hannover (DE)**

(72) Erfinder:
• **LEHNER, Steffen**
  **85072 Eichstätt (DE)**
• **KRAMEL, Manfred**
  **93098 Mintraching (DE)**
• **WIEHOFF, Hans-Jörg**
  **93051 Regensburg (DE)**
• **NOZERAN, Nicolas**
  **93047 Regensburg (DE)**
• **RUSSE, Peter**
  **93105 Tegernheim (DE)**

(56) Entgegenhaltungen:
DE-A1- 10 162 250    DE-A1-102007 033 469
DE-C1- 3 830 510

**Beschreibung**

Die Erfindung betrifft ein Verfahren zur Ermittlung des tatsächlichen Einspritzbeginns eines Piezo-Kraftstoff-Einspritz-ventils mit Direktantrieb für ein Hochdruck-KraftstoffEinspritzsystem für Verbrennungsmotoren. Weiterhin betrifft die Erfindung eine Vorrichtung zur Ansteuerung eines Kraftstoff-Einspritzventils zur Durchführung des oben genannten Verfahrens.

In Hochdruck-Einspritzsystemen für Verbrennungsmotoren, sowohl Diesel- als auch Otto-Motoren, insbesondere in Kraftfahrzeugen werden bevorzugt elektromechanisch betätigte Einspritzventile eingesetzt, um den Kraftstoff für den Verbrennungsvorgang zu dosieren. Um den ständig steigenden Anforderungen an die Betriebseigenschaften der Verbrennungsmotoren in Bezug auf den Kraftstoffverbrauch, die Leistungsausbeute, die Schadstoffemissionen und die Laufruhe der Verbrennungsmotoren gerecht zu werden, ist es erforderlich jeden einzelnen Verbrennungsvorgang möglichst genau zu steuern. Eine wesentliche Voraussetzung dafür ist es, sehr kleine Kraftstoffmengen sehr zeitgenau mit hoher Wiederholgenauigkeit und gegebenenfalls in mehreren unterschiedlichen Einspritzungen pro Verbrennungsvorgang, also mit hoher Geschwindigkeit, und bei sehr hohen Arbeitsdrücken in die einzelnen Brennräume der Verbrennungsmotoren zu dosieren.

Um dies zu ermöglichen werden sogenannte Piezo-Kraftstoff-Einspritzventile eingesetzt, bei denen durch Abheben einer Ventilnadel aus einem Ventilnadelsitz die Spritzlöcher des Ventils zum Einspritzen des Kraftstoffes in den Verbrennungsraum freigegeben werden. Hierbei werden zwei unterschiedliche Funktionsprinzipien unterschieden. Bei den konventioneller Bauart, wird das Ventil mit Hilfe des unter Hochdruck anstehenden Kraftstoffes betätigt, wobei der Piezo-Aktuator lediglich ein Steuerventil zur Steuerung des Betätigungsdruckes betätigt und von der Düsennadel entkoppelt ist. Piezo-Kraftstoff-Einspritzventile neuerer Bauart sind mit einem Piezo-Direktantrieb ausgestattet, bei dem die Düsennadel über eine Übersetzungsmechanik direkt vom Piezo-Aktuator betätigt wird. Ausführungsbeispiele für solche Piezo-Kraftstoff-Einspritzventile mit Direktantrieb sind in den Dokumenten DE 199 52 057 A1 und EP 1 760 305A1 offenbart sowie in Figur 1 dargestellt.

Die Piezo-Kraftstoff-Einspritzventile mit Direktantrieb haben gegenüber den konventionellen Piezo-Kraftstoff-Einspritz-ventilen mit hydraulischer Betätigung den Vorteil, dass der Hub der Düsennadel und somit die Durchflussmenge des Kraftstoffes bei der Einspritzung variabel gesteuert werden können. Durch entsprechende Ansteuerung des Piezo-Aktuators kann so der Einspritzverlauf über die Zeit variabel geformt werden. Ein Beispiel dafür zeigt Dokument DE 10 2007 033 469 A1.

All diesen Piezo-Kraftstoff-Einspritzventilen ist jedoch gemein, dass sie mit fertigungstechnischen Toleranzen behaftet sind, die sich zudem über die Betriebsdauer alterungsbedingt und verschleißbedingt ändern. Diese Toleranzen wirken sich unter anderem auf die Hubbewegung der Düsennadel und somit auf das Öffnungsverhalten des Ventils aus, so dass bei vorgegebener gleicher Ansteuerung daraus resultierend der Einspritzzeitpunkt und die Einspritzmenge des Kraftstoffes durchaus variieren können, was sich negativ auf die oben genannten Betriebseigenschaften eines Verbrennungsmotors auswirken kann.

In der Praxis wird dieser Problematik mit unterschiedlichen, sich gegenseitig ergänzenden Methoden begegnet. Ein Verfahren, das sogenannte IIC-Verfahren (Injector Individuell Coding) besteht darin die Einspritzventile nach Herstellung bezüglich ihrer Einspritzeigenschaften zu vermessen und entsprechend zu klassifizieren. Entsprechend der Klassifizierung werden dann in der Ventilsteuerung entsprechende Korrekturwerte vorgegeben und bei der Ventilansteuerung berücksichtigt. Ein anderes Verfahren, das sogenannte MFMA-Verfahren (Minimum Fuel Mass Adaption) findet in vorgegebenen Zyklen und unter vorgegebenen Randbedingungen im Betrieb statt. Dabei werden anhand von messbaren Systemgrößen, wie zum Beispiel dem Druckabfall im Common-Rail oder der Drehzahländerung der Kurbelwelle bei vorgegebenen Testeinspritzungen, Rückschlüsse gezogen auf die tatsächlich eingespritzte Kraftstoffmenge. Weicht diese von der gemäß der Ansteuerung des Ventils erwarteten Kraftstoffmenge ab, so werden daraus wiederum Korrekturwerte ermittelt, die dann bei folgenden Einspritzungen berücksichtigt werden.

Ein anderes Beispiel ist aus dem DE 3 830 510 C1 bekannt.

Um die Reproduzierbarkeit der einzelnen Einspritzungen weiter zu erhöhen ist es hilfreich, Informationen nicht nur zur Einspritzmenge sondern auch zum tatsächlichen Einspritzbeginn, zum Einspritzverlauf und zum Einspritzende zu erhalten. Der Einsatz der Piezo-Kraftstoff-Einspritzventile mit Direktantrieb eröffnet hier weitere Möglichkeiten die Genauigkeit der Einspritzung zu erhöhen.

Ein Piezo-Aktuator lässt anhand seines Kapazitätssignals Rückschlüsse auf Krafteinträge zu. Bei einem Piezo-Kraftstoff-Einspritzventile mit Direktantrieb ist die Düsennadel über steife Koppelelemente wie z. B. Hebel mit dem Piezo-Aktuator verbunden. Krafteinträge an der Düsennadel bilden sich darum im Piezosignal ab. So verändert sich beispielsweise die Piezokapazität während des Öffnungsvorgangs der Düse abhängig von der auf die Düsennadel wirkenden Gegenkraft. Beim Anfahren der Düsennadel an einen vorgegebenen Endanschlag beispielsweise ergibt sich ein signifikanter Sprung im Kapazitätswert. So lässt sich der Zeitpunkt wenn die Düsennadel an den Öffnungsanschlag anfährt, also vollständig geöffnet ist, der sogenannte Operation Point 2, sowie der Schließzeitpunkt, wenn die Düsennadel im Düsensitz zum Anschlag kommt, der sogenannte Operation Point 4 (OPP4), anhand des Kapazitätssignals sehr genau bestimmen.

Die erwähnte Vielzahl an zusätzlichen Einflüssen und eine unzureichende Signifikanz der Kapazitätsänderung im Öffnungs-zeitpunkt machen es jedoch unmöglich den tatsächlichen Öffnungszeitpunkt also den tatsächlichen Einspritzbeginn mit ausreichender Genauigkeit auf diese Art zu ermitteln.

Der vorliegenden Erfindung liegt daher die Aufgabe zugrunde, ein Verfahren anzugeben, das es ermöglicht den Öffnungszeitpunkt also den tatsächlichen Einspritzbeginn bei einem Piezo-Kraftstoff-Einspritzventile mit Direktantrieb mit ausreichender Genauigkeit zu ermitteln.

Diese Aufgabe wird durch das Verfahren mit den Merkmalen gemäß Patentanspruch 1 gelöst. Vorteilhafte Aus- und Weiterbildungen, welche einzeln oder in Kombination miteinander eingesetzt werden können, sind Gegenstand der abhängigen Ansprüche.

Das Verfahren zur Ermittlung des tatsächlichen Einspritzbeginns eines Kraftstoff-Einspritzventils mit einem Piezo-Direktantrieb einer Düsennadel, weist die folgenden Schritte auf. Zunächst erfolgt das Durchführen einer Test-Einspritzung mit derart kurzer Ansteuerdauer, dass ein Absteuerbeginn zeitlich so früh erfolgt, dass die Düsennadel die Öffnungs-Endlage nicht erreicht. Dies ist erforderlich, damit keine Verweilzeit der Düsennadel am Öffnungsanschlag entsteht, die für die weitere Durchführung des Verfahrens unerwünscht ist.

Der Absteuerbeginn ist dabei der Zeitpunkt zu dem die Ansteuerung des Piezo-Aktuators den Stromzufluss und somit die Hubrichtung des Piezo-Aktuators und damit der Düsennadel umkehrt, mit anderen Worten der Schließbeginn der Düsennadel. Dieser Zeitpunkt ist durch die Ansteuerung vorgegeben und somit exakt bekannt.

Im nächsten Schritt wird dann der Schließzeitpunkt der Düsennadel durch Messung und Auswertung einer elektrischen Größe des Piezo-Direktantriebs ermittelt. Vorzugsweise ist die dazu herangezogene elektrische Größe der Kapazitätswert des Piezo-Aktuators, da dieser zum Schließzeitpunkt einen signifikanten Verlauf in Form eines lokalen Minimums aufweist.

Nachdem der Schließzeitpunkt und der Zeitpunkt des Absteuerbeginns bekannt sind, kann, unter der Voraussetzung dass die Hubgeschwindigkeiten der Düsennadel im Schließ- und im Öffnungshub bekannt sind, was zum Beispiel repräsentativ experimentell ermittelt werden kann, vom Schließzeitpunkt über den Zeitpunkt des Absteuerbeginns auf den Öffnungszeitpunkt und damit auf den tatsächlichen Einspritzbeginn zurückgerechnet werden.

Solange eine ausreichend signifikante Ausprägung der gemessenen elektrischen Größe zum Schließzeitpunkt gegeben ist, kann durch zeitliche Verkürzung der Testeinspritzung, also durch Reduzierung der Einspritzmenge, ein gegebenenfalls bei der Rückrechnung auftretender zeitlicher Fehler minimiert werden. Im Extremfall lässt sich die Einspritzmenge bis auf null reduzieren. Dies entspricht einer Ansteuerung der Düsennadel derart, dass diese zwar von der Schließkraft entlastet wird jedoch gerade noch nicht aus ihrem Sitz abgehoben wird. Dadurch können, zum Beispiel bei Referenzmessungen, Fehler durch abweichende Öffnungs- und Schließgeschwindigkeiten der Düsennadel eliminiert werden.

Die Vorrichtung zur Ansteuerung eines Piezo-Kraftstoff-Einspritzventils mit einem Direktantrieb weist unter Anderem eine Recheneinheit und eine Speichereinheit auf. In der Vorrichtung ist, beispielsweise in der Speichereinheit, ein Computerprogramm mit einem Programmcode hinterlegt. Dieses Computerprogramm dient zur Durchführung des Verfahrens zur Ermittlung des tatsächlichen Einspritzbeginns eines Kraftstoff-Einspritzventils mit einem Piezo-Direktantrieb, wie vorgehend beschrieben, wenn das Programm auf der Recheneinheit ausgeführt wird. Die Vorrichtung zur Ansteuerung kann als Teil einer übergeordneten Steuereinrichtung, beispielsweise der Motorsteuerung ausgeführt sein. Bei Verbrennungsmotoren mit mehreren Zylindern kann pro Zylinder ein zugeordnete Vorrichtung zur Ansteuerung des jeweiligen Piezo-Kraftstoff-Einspritzventils vorgesehen sein oder auch eine für alle Zylinder gemeinsam zuständige Vorrichtung zur Ansteuerung, die die einzelnen Piezo-Kraftstoff-Einspritzventile der jeweiligen Zylinder wechselweise bedient.

Mit der Erfindung kann somit auf einfache und ausreichend genaue Weise der Zeitpunkt des tatsächlichen Einspritzbeginns ermittelt werden. Nachdem auch der Schließzeitpunkt und der Zeitpunkt des Absteuerbeginns bekannt sind, kann auch die tatsächliche Öffnungsdauer sowie die Hubhöhe der Düsennadel ermittelt werden. Darüber hinaus kann unter Heranziehung weiterer Messgrößen, wie zum Beispiel des Raildruckes, die tatsächlich eingespritzte Kraftstoffmenge rechnerisch und ggf. unter Heranziehung von Kennfeldern ermittelt werden. Durch den anschließenden Vergleich der Ist-Kraftstoffmenge zur Sollkraftstoffmenge bei der Testeinspritzung, können entsprechende Korrekturfaktoren ermittelt werden, die im weiteren Betrieb zur Erhöhung der Einspritzgenauigkeit herangezogen werden.

Vorteilhafte Ausgestaltungen werden in den Unteransprüchen offenbart.

Als zur Auswertung heranzuziehende elektrische Größe des Piezo-Direktantriebes kann vorteilhafter Weise die an den elektrischen Versorgungsanschlüssen eines zugeordneten Piezo-Aktuators messbare elektrische Kapazität (C) genutzt werden. Dies ermöglicht eine genaue Bestimmung des Schließzeitpunktes ($T_S$) der Düsennadel, da dieser Wert zu diesem Zeitpunkt einen besonders signifikanten Verlauf aufweist, der auch als Operation Point 4 (OPP4) bezeichnet wird und der mit hoher Zuverlässigkeit im Signalverlauf erkennbar ist.

Im Berechnungsverlauf ist es auf einfache Weise möglich, die Zeitspanne zwischen dem vorgegebenen Zeitpunkt des Absteuerbeginns ($T_A$) und dem Schließzeitpunkt ($T_S$) als Schließdauer ($t_S$) der Nadel zu ermitteln, da beide Zeitpunkte im Verlauf aufeinander folgen und der zeitliche Abstand zwischen diesen beiden Punkten die Schließdauer ($t_S$) darstellt.

Unter der Voraussetzung dass Schließdauer ($t_S$) und Öffnungsdauer ($t_O$) der Düsennadel in einem bekannten Verhältnis zu einander stehen, kann beim Zurückrechnen eine Öffnungsdauer ($t_O$) der Nadel auf Grundlage der Schließdauer($t_S$) durch Verrechnung mit einem entsprechenden Proportionalitätsfaktor ($F_P$), der dieses Verhältnis widerspiegelt, ermittelt werden.

Dieser Proportionalitätsfaktor ($F_P$) lässt sich auf einfache Weise aus dem Verhältnis zwischen Schließgeschwindigkeit ($V_S$) zu Öffnungsgeschwindigkeit($V_O$) der Düsennadel ermitteln. Dieses Verhältnis ergibt sich, wenn man die Gleichungen für die Hubhöhe der Düsennadel für den Öffnungshub ($h_O = t_O \times V_O$) und den Schließhub ($h_S = t_S \times V_S$) gleichsetzt und das Verhältnis von Öffnungsdauer zu Schließdauer ($t_O/t_S = V_S/V_O$ oder $F_P = V_S/V_O$) bildet. Dabei werden die Öffnungsgeschwindigkeit und die Schließgeschwindigkeit als bekannte, ggf. vorab gemessene, Größen vorausgesetzt.

Der tatsächliche Einspritzbeginn kann somit ausgehend vom Schließzeitpunkt ($T_S$) durch Subtraktion der Schließdauer($t_S$) und der Öffnungsdauer ($t_O$), die in Summe die tatsächliche Einspritzdauer ($t_E$) ergeben, ermittelt werden.

Eine weitere Verbesserung des oben beschriebenen Verfahrens kann dadurch erzielt werden, dass vorab, in Abhängigkeit von einem Arbeitsdruck des Kraftstoff-Einspritzventils, das heißt bei verschiedenen Arbeitsdrücken innerhalb eines Druckbereiches, wie sie im späteren reellen Betrieb auftreten können, die zugehörigen Proportionalitätsfaktoren in Versuchen vorab ermittelt werden und im Betrieb in einem Kennfeld, zur Berechnung des tatsächlichen Einspritzbeginns unter Beachtung des aktuellen Arbeitsdruckes, zur Verfügung gestellt werden. Hierbei können auch noch andere Betriebsgrößen, wie zum Beispiel die Arbeitstemperatur oder der Verschleißzustand, mit in Betracht gezogen werden, zu denen der Proportionalitätsfaktor in Abhängigkeit steht.

Die Ermittlung der Proportionalitätsfaktoren kann zum Beispiel anhand eines baugleichen Musters des Kraftstoff-Einspritzventils repräsentativ durch Versuche erfolgen und für alle baugleichen Kraftstoff-Einspritzventile vorgegeben werden. Es ist jedoch auch möglich, im Anschluss an den Herstellungsprozess jedes Kraftstoff-Einspritzventils auf einem Prüfstand, die für dieses einzelne Ventil gültigen Proportionalitätsfaktoren zu ermitteln und spezifisch zu diesem Ventil zur Verfügung zu stellen. Dazu werden die ermittelten Werte in einem jeweiligen Kennfeld zusammengefasst und in der Speichereinheit der Vorrichtung zur Ansteuerung des Ventils hinterlegt. Diese Maßnahmen erhöhen die Genauigkeit und erweitern den Einsatzbereich des beanspruchten Verfahrens insofern, dass die Einflüsse eines sich im Betrieb ändernden Arbeitsdruckes bei der Ermittlung des tatsächlichen Einspritzbeginns mit berücksichtigt werden können. Es erübrigt sich dadurch, zur exakten Durchführung des Verfahrens zunächst bestimmte Randbedingungen bezüglich des Arbeitsdruckes zu schaffen.

Ausführungsbeispiele der Erfindung werden im Folgenden anhand der Darstellungen in der Zeichnung näher erläutert.

Es zeigen:

Fig. 1 eine dreidimensionale Schnittdarstellung eines Piezo-Kraftstoff-Einspritzventils mit Direktantrieb,

Fig. 2 ein Diagramm mit der Darstellung des zeitlichen Verlaufs verschiedener Signal- und Messgrößen am Piezo-Kraftstoff-Einspritzventil für einen typischen Einspritzzyklus,

Fig. 3 ein Diagramm mit der Darstellung des zeitlichen Verlaufs der wesentlichen elektrischen Signale, Strom, Spannung und Kapazität, des Piezo-Aktuators in Relation zum Hubweg der Düsennadel während einer Testeinspritzung,

Fig. 4 ein Ablaufdiagramm eines Ausführungsbeispiels des erfindungsgemäßen Verfahrens und

Fig. 5 eine vereinfachte Darstellung eines Ausführungsbeispiels einer Anordnung einer Vorrichtung zur Ansteuerung eines Kraftstoff-Einspritzventils mit einem Piezo-Direktantrieb.

Funktions- und Benennungsgleiche Teile sind in den Figuren mit den selben Bezugszeichen bezeichnet.

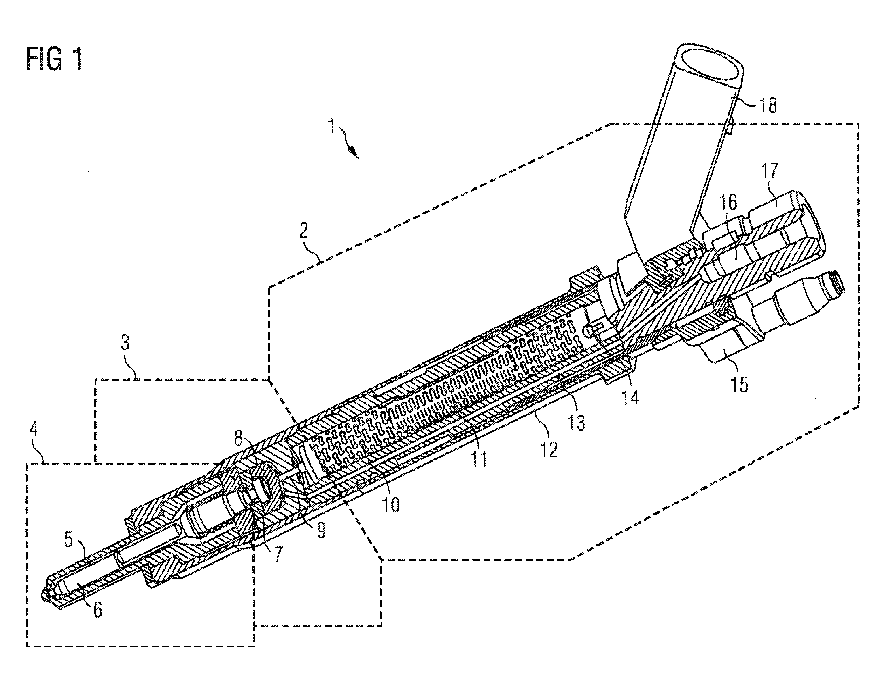

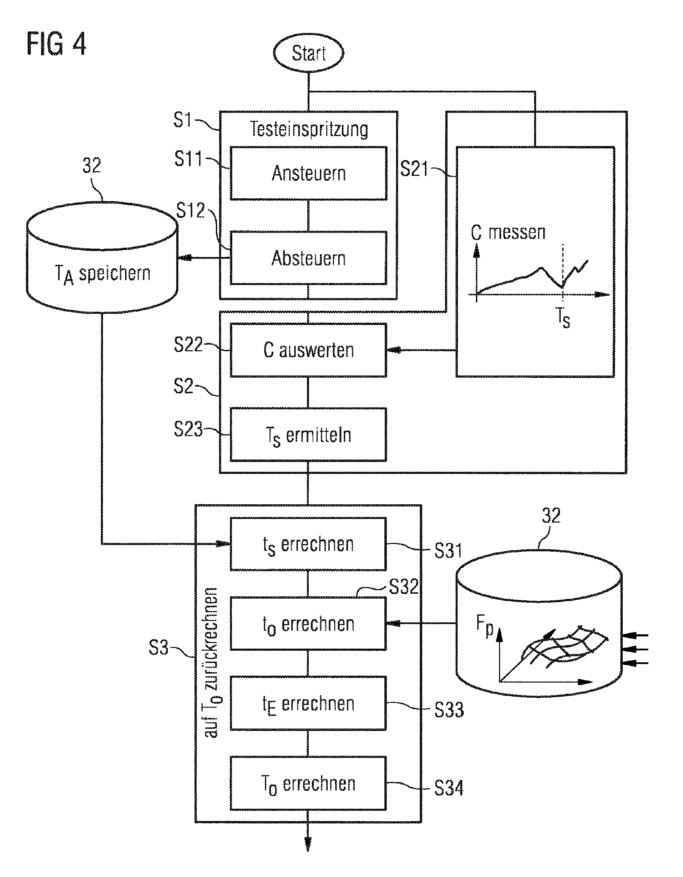

Während Figur 1 den prinzipiellen Aufbau eines Piezo-Kraftstoff-Einspritzventils 1 mit Direktantrieb zeigt, ist in Figur 4 dessen Anordnung im Gesamtsystem der Verbrennungsmaschine dargestellt. Das Piezo-Kraftstoff-Einspritzventil 1 besteht im Wesentlichen aus drei Funktionseinheiten, der Aktuator-Einheit 2, der Verstärker-Einheit 3 und der Düseneinheit 4. Die Aktuator-Einheit 2 weist das in einer Federhülse 10 aufgenommene Piezoelement 11 mit Anschlussstecker 14 auf, das im Aktuatorgehäuse 12 angeordnet ist. Am oberen Ende des Aktuatorgehäuses 12 ist der Hochdruckanschluss 17 mit Kraftstofffilter 16, sowie ein Leckage-Rücklauf-Anschluss 15 und ein Steueranschluss 18 angeordnet. Über den Hochdruckanschluss 17 steht das Piezo-Kraftstoff-Einspritzventil 1 im Einbauzustand über eine Hochdruck-Kraftstoffleitung mit dem Common-Rail 26 in Verbindung. Der Kraftstoff wird dann durch den Kraftstofffilter 16 und den Hochdruckzulaufkanal 13 in die Düsen-Einheit 4 geleitet. Über den Steueranschluss 18 und eine daran angeschlossene Steuersignalleitung 39 steht das Piezo-Kraftstoff-Einspritzventil 1, insbesondere das Piezoelement 11, im Einbauzustand mit der zugeordneten Steuervorrichtung 30 in Verbindung.

Die Verstärkereinheit 3 besteht aus einem Betätigungsstift 9, der als Übertragungsglied zwischen dem Piezoelement 11 und der sogenannten Betätigungsglocke 8 wirkt. Die Betätigungsglocke 8 wiederum steht in mechanischem Kontakt mit Betätigungshebeln 7, die ihrerseits auf das hintere Ende der Düsennadel 6 wirken.

Die Düsennadel 6 gehört zur Düsen-Einheit 4 und ist im Düsenmantel 5 angeordnet. Auf die Düsennadel 6 wirkt eine Druckfeder die die Düsennadel 6 mit Ihrer Spitze in den Ventilsitz in der Spitze des Düsenmantels 5 drückt und so das Ventil geschlossen hält.

Zum Öffnen des Einspritzventils wird nun dem Piezoelement 11 von der Steuervorrichtung über den Steueranschluss 18 ein Ladestrom zugeführt. So dehnt sich das Piezoelement 11 aus und drückt mittels des Betätigungsstifts 9 auf die Betätigungsglocke 8. Die Betätigungsglocke 8 wiederum stützt sich auf den äußeren Enden der Betätigungshebel 7 ab und drückt diese "herunter" in Richtung Düsenspitze. Die Betätigungshebel 7 stützen sich nach Art einer Wippe auf einer Zwischenplatte ab und greifen mit den jeweils anderen, inneren Enden unter eine pilzförmige Ausformung am Düsennadelende. Durch Herunterdrücken der äußeren Enden der Betätigungshebel 7 werden deren innere Enden in Richtung Aktuator-Einheit 2 nach Art einer Wippe angehoben und heben so die Düsennadel 6 insbesondere die Düsennadelspitze aus ihrem Sitz, wodurch das Ventil in der Düsenspitze geöffnet und Kraftstoff in einen zugehörigen Brennraum eines Verbrennungsmotors 20 eingespritzt wird. Der dadurch erzielbare Maximalhub der Düsennadel 6 wird durch den Anschlag an der Zwischenplatte begrenzt.

Zum Schließen des Einspritzventils wird nun durch die Steuervorrichtung 30 der Stromfluss zum Piezoelement 11 umgekehrt, wodurch dieses sich entlädt und verkürzt. Zu Beginn dieses Vorgangs verkürzt sich das Piezoelement mit hoher Geschwindigkeit, so dass die Kraft, die der Betätigungsstift 9 auf das Piezoelement 11 ausübt, auf ein Minimum fällt. Mit Voranschreiten der Entladung verlangsamt sich die Verkürzungsgeschwindigkeit des Piezoelements 11. Dagegen wird die Düsennadel 6 durch die Druckfeder in Richtung Nadelsitz in der Düsenspitze und die Betätigungsglocke 8 mitsamt Betätigungsstift 9 in Gegenrichtung beschleunigt. So baut sich die über den Betätigungsstift 9 auf das Piezoelement 11 wirkende Kraft wieder auf, bis die Düsennadel 6 in ihrem Sitz zum Anschlag kommt. Hier endet die Pinbewegung abrupt und die Kraft zwischen Betätigungsstift 9 und Piezoelement 11 fällt erneut ebenso abrupt. Wichtig für die Ausführung des erfindungsgemäßen Verfahrens ist nun zu wissen, dass der am elektrischen Anschlussstecker 14 des Piezoelementes zu messende Kapazitätswert sich umgekehrt proportional zu der auf das Piezoelement 11 wirkenden Kraft verhält.

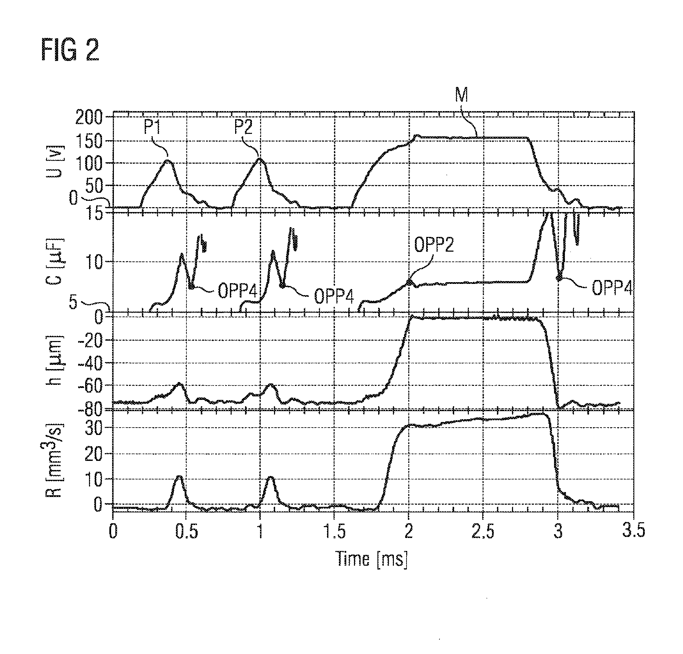

Der Zusammenhang zwischen den verschiedenen Signal- und Messgrößen eines Piezo-Kraftstoff-Einspritzventils, der Spannung U, der Kapazität C, des Nadelhubs h und der Einspritzrate R ist in Figur 2 dargestellt. Die vier unterschiedlichen Verlaufsdiagramme sind mit übereinstimmender, horizontaler Zeitachse übereinander angeordnet, so dass der Zusammenhang erkennbar wird. Abgebildet ist der jeweilige Messwertverlauf der einzelnen Größen während eines gebräuchlichen Einspritzzyklus mit zwei kurzen Voreinspritzungen und einer längeren Haupteinspritzung, im Spannungsdiagramm mit P1, P2 und M bezeichnet. Die Spannungskurve U, die Hubkurve h und die Einspritzratenkurve R korrelieren direkt, wobei ein Zeitversatz zwischen der Spannungskurve und den anderen beiden Kurven zu erkennen ist. Der Verlauf der Kapazitätskurve C hebt sich dagegen deutlich von den anderen Kurvenverläufen ab. Signifikant ist dabei jeweils ein lokales Minimum, das als Operation Point 4, OPP4, bezeichnet ist, zu erkennen, das den Zeitpunkt widerspiegelt zu dem die Düsennadel 6 in ihrem Sitz zum Anschlag kommt, das Ventil also vollständig geschlossen ist. Der weitere mit OPP2 gekennzeichnete Operation Point 2 im Kapazitätsverlauf C spiegelt den Zeitpunkt wieder, zu dem die Düsennadel 6 bei vollständiger Öffnung ihren Maximalhub erreicht, siehe Hubkurve h, und an ihrem "Öffnungs-Anschlag" zur Anlage kommt. Deutlich ist zu erkennen, dass die Kapazitätskurve C jeweils exakt zum Schließzeitpunkt der Düsennadel ein sehr signifikantes lokales Minimum aufweist, OPP4, dessen zeitliche Lage messtechnisch eindeutig und mit großer Sicherheit erfasst werden kann.

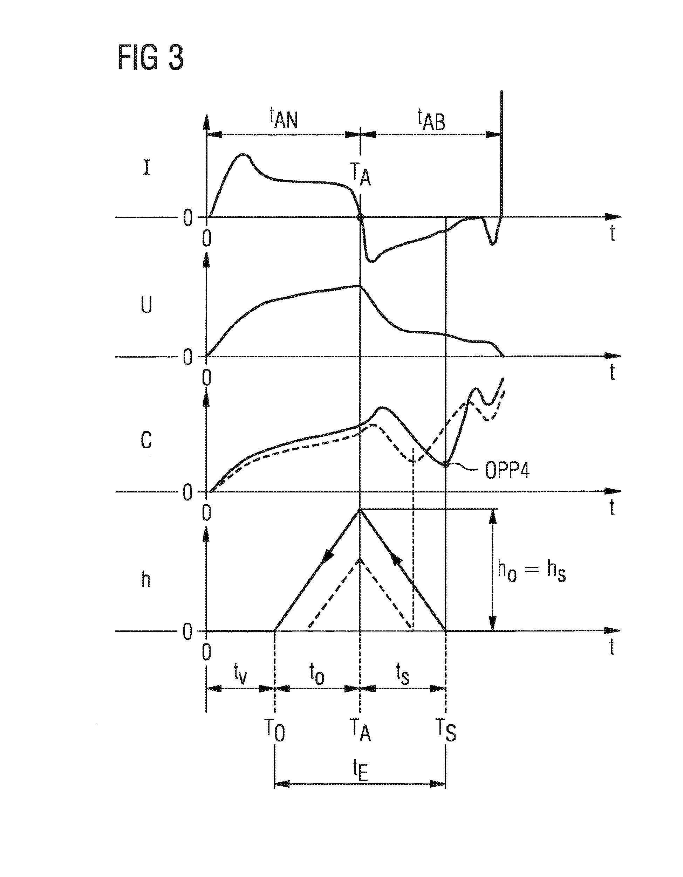

In Figur 3 sind wiederum vier Diagramme der maßgeblichen Messgrößen des Piezo-Kraftstoff-Einspritzventils, Stromverlauf I, Spannungsverlauf U, Kapazitätsverlauf C und Hubwegverlauf h, in zeitlicher Relation übereinander dargestellt. Hier ist jedoch der Signalverlauf während einer erfindungsgemäßen Testeinspritzung, in zeitlich höherer Auflösung dargestellt, sowie die für das erfindungsgemäße Verfahren wesentlichen Zeitpunkte und Zeitabschnitte eingezeichnet. In der Stromverlaufskurve I ist vor allem der Absteuerzeitpunkt $T_A$ als markanter Punkt wichtig. Dieser ist gekennzeichnet durch den Vorzeichenwechsel des Stromwertes am Null-Durchgang der Stromverlaufskurve. Bis zu diesem Zeitpunkt wird das Piezoelement 11 geladen und dehnt sich dabei aus, ab diesem Zeitpunkt wird es wieder entladen und zieht sich zusammen.

Die Spannungsverlaufkurve U ist in dieser Betrachtung von untergeordneter Bedeutung, wobei sich auch hier der Absteuerzeitpunkt $T_A$ an dem Punkt ablesen lässt, an dem der Gradient des Spannungskurvenverlaufes das Vorzeichen wechselt.

In der Kapazitätsverlaufskurve ist vor allem der sogenannte Operation Point 4, OPP4, von Bedeutung. Dieser kennzeichnet ein lokales Minimum in der Kapazitätsverlaufskurve und fällt mit dem Schließzeitpunkt $T_S$ zusammen.

Ausgehend von den somit bekannten beiden Zeitpunkten $T_A$ und TS, ist in der Hubwegverlaufskurve h die Rückrechnung auf den Öffnungszeitpunkt $T_O$, also den tatsächlichen Einspritzbeginn dargestellt. Die gestrichelt eingezeichneten Kurvenverläufe im Kapazitätsverlaufs- und Hubverlaufs-Diagramm kennzeichnen dabei die Kurvenverläufe bei einer kürzeren Schließzeit. Der Ablauf des Verfahrens wird im Folgenden in Zusammenschau mit dem in Figur 4 beispielhaft dargestellten Blockschaltbild einer möglichen Ausführung des Verfahrens erläutert.

Zunächst wird in einem Verfahrensschritt S1 eine Testeinspritzung durchgeführt. Diese besteht aus den Einzelschritten S11, Ansteuern des Piezoelementes 11 für eine Ansteuerdauer $t_{AN}$ und S12, Absteuern des Piezoelementes 11 für eine Absteuerdauer $t_{AB}$. Dabei ist die Ansteuerdauer $t_{AN}$ so kurz bemessen, dass die Düsennadel 6 mit Sicherheit ihre Öffnungs-Endlage nicht erreicht. Zum Vorgegebenen Absteuerzeitpunkt $T_A$ wird im Schritt S12 durch Umkehr des Stromflusses für eine Absteuerdauer $t_{AB}$ das Piezoelement 11 wieder entladen. Der Absteuerzeitpunkt $T_A$ wird festgehalten in einem dafür vorgesehenen Speicherbereich einer Speichereinheit 32.

Im Verfahrensschritt S2 erfolgt zunächst parallel zum Verfahrensschritt S1 im Einzelschritt S21 eine Messung des Kapazitätswertes C während der Dauer der Testeinspritzung. Im Einzelschritt S22 wird die aufgenommene Kapazitätsverlaufskurve ausgewertet um den Operation Point 4, OPP4, zu isolieren und im Einzelschritt S23 wird daraus der tatsächliche Schließzeitpunkt $T_S$ der Düsennadel 6 ermittelt.

In dem weiteren Verfahrensschritt S3 erfolgt dann die Rückrechnung auf den tatsächlichen Einspritzbeginn. Dazu wird im Einzelschritt S31 zunächst die Schließdauer $t_S$ der Düsennadel 6 als Differenz zwischen dem Schließzeitpunkt $T_S$ und dem Absteuerzeitpunkt $T_A$ errechnet. Im nächsten Einzelschritt S32 wird auf Basis der Schließdauer $t_S$ die Öffnungsdauer $t_O$ ermittelt. Dies kann prinzipiell auf unterschiedliche Weise geschehen. Geht man zum Beispiel näherungsweise einfach davon aus, dass der Gradient des Schließhubes der Düsennadel 6 über der Zeit, also die Schließgeschwindigkeit $V_S$, dem Gradient des Öffnungshubes, also der Öffnungsgeschwindigkeit $V_O$ entspricht, so ist die Öffnungsdauer $t_O$ zeitlich genauso lang wie die Schließdauer $t_S$. Dieser einfache Fall ist auch in Figur 3 dargestellt.

Figur 3 zeigt darüber hinaus jedoch, wie die Berechnung der Öffnungsdauer bei unterschiedlichen Öffnungs- und Schließgeschwindigkeiten prinzipiell durchgeführt werden kann. Ausgehend vom Schließzeitpunkt $T_S$ wird mit der als bekannt vorausgesetzten Schließgeschwindigkeit $V_S$ und der ermittelten Schließdauer $t_S$ der Hubweg $h_S$ der Düsennadel (gemäß $h_S=V_S*t_S$) ermittelt, wobei der Schließhub dem Öffnungshub gleichzusetzen ist $h_S=h_O$. Ausgehend vom Hubweg $h_O$ der Düsennadel kann nun wiederum mit der als bekannt vorauszusetzenden Öffnungsgeschwindigkeit $V_O$ die Öffnungsdauer $t_O$ (gemäß $t_O=h_O/V_O$) ermittelt werden.

Aufgrund der Druckverhältnisse im Einspritzventil und der mechanischen Gegebenheiten werden sich mit großer Wahrscheinlichkeit die Schließgeschwindigkeit $V_S$ und die Öffnungsgeschwindigkeit $V_O$ der Düsennadel unterscheiden. Geht man nun davon aus, dass Schließ- und Öffnungsgeschwindigkeit nicht gleich sind, jedoch in einem bestimmten Verhältnis zu einander stehen, so kann dies mit Hilfe eines Proportionalitätsfaktors $F_P$, der dieses Verhältnis wiedergibt, in der Berechnung berücksichtig werden. Dies ergibt sich aus der Gleichstellung der Formeln für den Schließ- und den Öffnungshub wie folgt:

$$h_S=V_S*t_S \quad und \quad h_O=V_O*t_O \quad sowie \quad h_S=h_O$$

$$zu \quad V_O*t_O=V_S*t_S \quad => \quad t_O = t_S * V_S/V_O$$

$$mit \quad V_S/V_O=F_P \quad ergibt \; sich \quad \underline{\mathbf{t_O = t_S * F_P}}$$

Da sich nun die Druckverhältnisse und die mechanischen Gegebenheiten, wie zum Beispiel die Reibung, abhängig von der Betriebstemperatur und dem Rail-Betriebsdruck ändern können führt die Vorgabe eines festen Proportionalfaktors $F_P$ ggf. zu ungenauen Ergebnissen bei der Rückrechnung des tatsächlichen Einspritzbeginns. Um die Genauigkeit der Berechnung zu steigern kann deshalb ein Kennfeld für den Proportionalitätsfaktor in einem Speicherbereich einer Speichereinheit 32 bereitgestellt werden, das für den jeweiligen Betriebspunkt des Einspritzventils den zugehörigen Proportionalitätsfaktor $F_P$ für die Rückrechnung liefert.

Ein fest vorgegebener Proportionalitätsfaktor oder ein Kennfeld für den Proportionalitätsfaktor kann, je nach Genauigkeitsbedürfnis, einmalig, repräsentativ für eine Baureihe des Piezo-Kraftstoff-Einspritzventils in Versuchen ermittelt und zur Verfügung gestellt werden. Für gesteigerte Genauigkeit ist es jedoch auch denkbar für jedes einzelne Piezo-Kraftstoff-Einspritzventil im Rahmen des Herstellungsprozesses ein entsprechendes Kennfeld zu erstellen, mit dem Piezo-Kraftstoff-Einspritzventil mitzuliefern und in einer Speichereinheit 32 einer Steuervorrichtung 30 zur Ansteuerung der Piezo-Kraftstoff-Einspritzventile im Betrieb zur Verfügung zu stellen.

Im nächsten Teilschritt S33 des Verfahrens wird dann durch Addition von Schließdauer $t_S$ und Öffnungsdauer $t_O$ die Einspritzdauer $t_E$ ermittelt. Im letzten Teilschritt S34 wird durch Abzug der Einspritzdauer $t_E$ vom Schließzeitpunkt $T_S$ ausgehend der Öffnungszeitpunkt $T_O$ und somit der tatsächliche Einspritzbeginn ermittelt.

Rechnet man nun vom Öffnungszeitpunkt weiter zurück bis zum Startzeitpunkt der Testeinspritzung, so erhält man zusätzlich die Verzögerungsdauer $t_V$, die ein Maß für den Leerhub der Übertragungsmechanik darstellt.

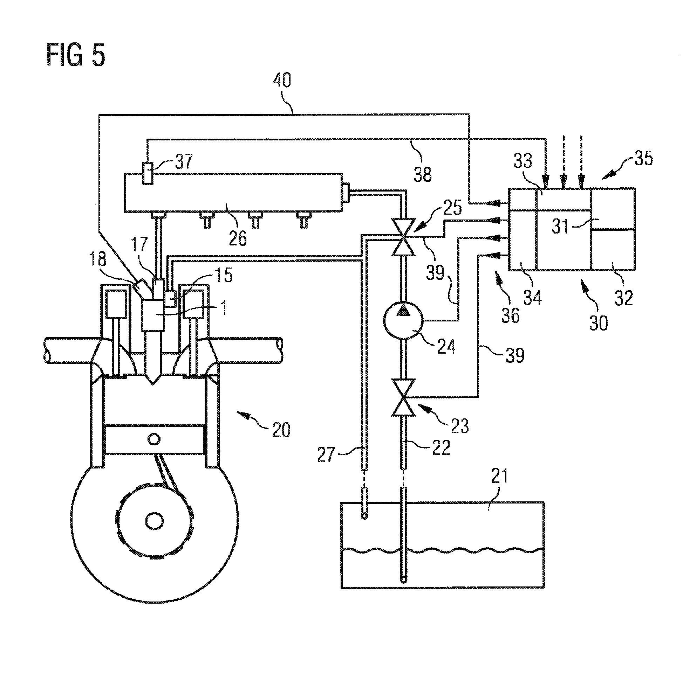

Figur 5 zeigt die Anordnung einer erfindungsgemäßen Vorrichtung 30 zur Ansteuerung eines Piezo-Kraftstoff-Einspritz-ventils 1 in einer Gesamtanordnung mit einem Verbrennungsmotor 20. Die Steuervorrichtung 30 weist eine Recheneinheit 31 und eine Speichereinheit 32 sowie ein Signalempfänger-Modul 33 und ein Signalgeber-Modul 34 auf. Die Steuervorrichtung 30 ist dazu eingerichtet das erfindungsgemäße Verfahren zur Ermittlung des tatsächlichen Einspritzbeginns durchzuführen. Dazu ist in der Speichereinheit ein Computerprogramm mit einem Programmcode hinterlegt, das bei Ausführung auf der Recheneinheit 31 das Verfahren unter Zugriff auf Signalempfänger-Modul 33 und Signalgeber-Modul 34 durchführt. Dazu steht die Steuervorrichtung 30 weiterhin über eine Piezo-Steuer-Mess-Leitung 40 mit dem Steueranschluss 18 des Piezo-Kraftstoff-Einspritzventils 1 in Verbindung.

Der Anschluss der Piezo-Steuer-Mess-Leitung 40 ist gleichzeitig dem Signalempfänger-Modul 33 und dem Signalgeber-Modul 34 der Steuervorrichtung 30 zugeordnet. Die Piezo-Steuer-Mess-Leitung 40 dient gleichzeitig zur Übermittlung der Ansteuersignale von der Steuervorrichtung 30 an das Piezo-Kraftstoff-Einspritzventil 1, um im Rahmen des erfindungsgemäßen Verfahrens die Testeinspritzung durchzuführen und der Übermittlung des für die Kapazität repräsentativen Messsignals vom Piezoelement 11 des Piezo-Kraftstoff-Einspritzventil 1 an die Steuervorrichtung 30. In anderen Ausführungen können jedoch auch separate Steuer- und Sensorsignalleitungen am Piezo-Kraftstoff-Einspritzventil vorgesehen sein.

Das Piezo-Kraftstoff-Einspritzventils 1 ist im Zylinderkopf des Verbrennungsmotors 20 angeordnet und weist außer dem Steueranschluss 18, einen Hochdruckanschluss 17 und einen Leckage-Rücklauf-Anschluss 15 auf. Über den Hochdruckanschluss 17 steht das Piezo-Kraftstoff-Einspritzventil 1 mit dem Common-Rail 26 des Hochdruck-Einspritzsystems in hydraulischer Verbindung. Über den Leckage-Rücklauf-Anschluss 15 und die Kraftstoffrückleitung 27 steht das Piezo-Kraftstoff-Einspritzventil 1 mit dem Kraftstofftank 21 in hydraulischer Verbindung. Über diesen Anschluss wird der durch die Dauerleckage des Piezo-Kraftstoff-Einspritzventil 1 verursachte Kraftstoffrückfluss wieder in den Kraftstofftank 21 zurückgeführt.

Das Common-Rail 26 wird aus dem Kraftstofftank 21, über die Kraftstoffzuleitung 22 mittels der Hochdruckpumpe 24 mit Kraftstoff auf hohem Druckniveau gespeist. Der Hochdruckpumpe 24 ist stromaufwärts in der Kraftstoffzuleitung 22 ein Zumessventil 23 und stromabwärts ein Druckregelventil 25 zugeordnet. Über das Zumessventil 23, die Hochdruckpumpe 24 und das Druckregelventil 25 wird der erforderliche Betriebs-Hochdruck im Common-Rail 26 eingestellt. Am Common-Rail 26 ist ein Raildrucksensor 37 angeordnet. Der Raildrucksensor 37 steht über eine Sensorsignalleitung 38 und einen Sensorsignal-Eingang 35 mit einem Signalempfänger-Modul 33 der Steuervorrichtung 30 elektrisch in Verbindung und stellt der Steuervorrichtung 30 ein für die Druckregelung erforderliches Druck-Messsignal zur Verfügung.

Über Steursignal-Ausgänge 36 und entsprechende Steuersignalleitungen 39 steht die Steuervorrichtung 30 elektrisch mit der Hochdruckpumpe 24, dem Zumessventil 23 und dem Druckregelventil 25 zur Ansteuerung dieser Komponenten in Verbindung. Das Druckregelventil ist weiterhin an die Kraftstoffrückleitung 27 angeschlossen, um den bei der Druckregelung entstehenden Kraftstoffabfluss wieder in den Kraftstofftank 21 zurück zu führen.

**Patentansprüche**

1.   Verfahren zur Ermittlung des tatsächlichen Einspritzbeginns eines Kraftstoff-Einspritzventils mit einem Piezo-Direktantrieb einer Düsennadel, mit den Schritten:

- Durchführen einer Test-Einspritzung mit derart kurzer Ansteuerdauer, dass ein Absteuerbeginn zeitlich so früh erfolgt, dass die Düsennadel die Öffnungs-Endlage nicht erreicht,
- Ermitteln des Schließzeitpunktes der Düsennadel durch Messung und Auswertung einer elektrischen Größe des Piezo-Direktantriebs,
- Zurückrechnen vom Schließzeitpunkt über den Absteuerbeginn auf den tatsächlichen Einspritzbeginn.

2.   Verfahren nach Anspruch 1, **dadurch gekennzeichnet, dass** die elektrische Größe des Piezo-Direktantriebes die an den elektrischen Versorgungsanschlüssen eines zugeordneten Piezo-Aktuators messbare Kapazität ist.

3.   Verfahren nach Anspruch 1 oder 2, **dadurch gekennzeichnet, dass** beim Zurückrechnen die Zeitspanne zwischen dem vorgegebenen Absteuerbeginn und dem Schließzeitpunkt als Schließdauer der Nadel ermittelt wird.

4.   Verfahren nach Anspruch 3, **dadurch gekennzeichnet, dass** beim Zurückrechnen eine Öffnungsdauer der Nadel auf Grundlage der Schließdauer durch Verrechnung mit einem Proportionalitätsfaktor ermittelt wird.

5.   Verfahren nach Anspruch 4, **dadurch gekennzeichnet, dass** der Proportionalitätsfaktor aus dem Verhältnis zwischen Schließgeschwindigkeit zu Öffnungsgeschwindigkeit der Düsennadel ermittelt wird.

**6.** Verfahren nach Anspruch 4 oder 5, **dadurch gekennzeichnet, dass** der tatsächliche Einspritzbeginn ausgehend vom Schließzeitpunkt durch Subtraktion der Schließdauer und der Öffnungsdauer ermittelt wird.

**7.** Verfahren nach einem der Ansprüche 4 bis 6, **dadurch gekennzeichnet, dass** in Abhängigkeit von einem Arbeitsdruck des Kraftstoff-Einspritzventils und/oder anderen Betriebsgrößendie zugehörigen Proportionalitätsfaktoren vorab ermittelt werden und im Betrieb in einem Kennfeld, zur Berechnung des tatsächlichen Einspritzbeginns zur Verfügung gestellt werden.

**8.** Vorrichtung zur Ansteuerung eines Kraftstoff-Einspritzventils mit einem Piezo-Direktantrieb, mit einer Recheneinheit und einer Speichereinheit und mit einem hinterlegten Computerprogramm mit einem Programmcode zur Durchführung des Verfahrens mit Merkmalen eines der Ansprüche 1 bis 6, wenn das Programm auf der Recheneinheit ausgeführt wird.

**Claims**

**1.** Method for determining the actual start of injection of a fuel injection valve having a piezo direct drive of a nozzle needle, having the steps:

- carrying out a test injection with such a short actuation period that a start of shut-off occurs so early that the nozzle needle does not reach the opening end position,
- determining the closing time of the nozzle needle by measuring and evaluating an electrical variable of the piezo direct drive, and
- calculating back from the closing time to the actual start of injection via the start of shut-off.

**2.** Method according to Claim 1, **characterized in that** the electrical variable of the piezo direct drive is the capacitance which can be measured at the electrical supply connections of an assigned piezo actuator.

**3.** Method according to Claim 1 or 2, **characterized in that** during the calculating back the time period between the predefined start of shut-off and the closing time is determined as a closing period of the needle.

**4.** Method according to Claim 3, **characterized in that** during the calculating back an opening period of the needle is determined on the basis of the closing period by combination with a proportionality factor.

**5.** Method according to Claim 4, **characterized in that** the proportionality factor is determined from the ratio between the closing speed and the opening speed of the nozzle needle.

**6.** Method according to Claim 4 or 5, **characterized in that** the actual start of injection is determined starting from the closing time by subtracting the closing period and the opening period.

**7.** Method according to one of Claims 4 to 6, **characterized in that** the associated proportionality factors are determined in advance as a function of a working pressure of the fuel injection valve and/or other operating variables and are made available during operation in a characteristic diagram, in order to calculate the actual start of injection.

**8.** Device for actuating a fuel injection valve having a piezo direct drive, having a computing unit and a memory unit, and having a stored computer program with a program code for carrying out the method having features of one of Claims 1 to 6 when the program is run on the computing unit.

**Revendications**

**1.** Procédé permettant de déterminer le début d'injection effectif d'une soupape d'injection de carburant avec une commande directe piézoélectrique d'une aiguille d'injecteur, comportant les étapes :

- réalisation d'une injection test avec une durée d'activation si courte qu'un début de désactivation se produit chronologiquement si tôt que l'aiguille d'injecteur n'atteint pas la position finale d'ouverture,
- détermination du moment de fermeture de l'aiguille d'injecteur par la mesure et l'analyse d'une grandeur électrique de la commande directe piézoélectrique,

- calcul du début de désactivation à partir du moment de fermeture et en tenant compte du début d'injection effectif.

2. Procédé selon la revendication 1, **caractérisé en ce que** la grandeur électrique de la commande directe piézoélectrique est la capacité pouvant être mesurée au niveau des raccords d'alimentation électrique d'un actionneur piézoélectrique associé.

3. Procédé selon les revendications 1 ou 2, **caractérisé en ce qu'**au moment du calcul, l'intervalle de temps entre le début de désactivation défini et le moment de fermeture est déterminé comme la durée de fermeture de l'aiguille d'injecteur.

4. Procédé selon la revendication 3, **caractérisé en ce qu'**au moment du recalcul, une durée d'ouverture de l'aiguille d'injecteur est déterminée sur la base de la durée de fermeture moyennant un calcul avec un facteur de proportionnalité.

5. Procédé selon la revendication 4, **caractérisé en ce que** le facteur de proportionnalité est déterminé à partir du rapport entre la vitesse de fermeture et la vitesse d'ouverture de l'aiguille d'injecteur.

6. Procédé selon les revendications 4 ou 5, **caractérisé en ce que** le début d'injection effectif à partir du moment de fermeture est déterminé par la soustraction de la durée de fermeture et de la durée d'ouverture.

7. Procédé selon l'une quelconque des revendications 4 à 6, **caractérisé en ce que**, en fonction de la pression de travail de la soupape d'injection de carburant et/ou d'autres grandeurs de service, les facteurs de proportionnalité correspondants sont déterminés préalablement et sont mis à disposition en cours de service dans un diagramme caractéristique pour calculer le début d'injection effectif.

8. Dispositif permettant d'activer une soupape d'injection de carburant avec une commande directe piézoélectrique, comportant une unité de calcul et une unité de mémoire et comportant un programme informatique stocké avec un code de programme pour la mise en oeuvre du procédé avec les caractéristiques des revendications 1 à 6, lorsque le programme est exécuté sur l'unité de calcul.

FIG 1

EP 2 572 096 B1

FIG 2

# FIG 3

**FIG 4**

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19952057 A1
- EP 1760305 A1
- DE 102007033469 A1
- DE 3830510 C1